(19) Europäisches Patentamt
European Patent Office
Office européen des brevets

(11) Veröffentlichungsnummer: **0 060 471**
**B1**

# (12) EUROPÄISCHE PATENTSCHRIFT

(45) Veröffentlichungstag der Patentschrift: **06.02.85**

(51) Int. Cl.⁴: **A 01 N 43/90,** C 07 D 487/04

(21) Anmeldenummer: **82101775.3**

(22) Anmeldetag: **06.03.82**

(54) **Mikrobiozid und seine Verwendung.**

(30) Priorität: **13.03.81 DE 3109551**

(43) Veröffentlichungstag der Anmeldung: **22.09.82 Patentblatt 82/38**

(45) Bekanntmachung des Hinweises auf die Patenterteilung: **06.02.85 Patentblatt 85/6**

(84) Benannte Vertragsstaaten: **AT BE CH DE FR GB IT LI NL**

(56) Entgegenhaltungen:
**DE - B - 1 148 706**
**DE - B - 1 203 916**
**US - A - 3 437 419**

(73) Patentinhaber: **RIEDEL-DE HAEN AKTIENGESELLSCHAFT, Wunstorfer Strasse 40, D-3016 Seelze 1 (DE)**

(72) Erfinder: **Gattner, Hans, Dr., Harrenhorst 15, D-3052 Bad Nenndorf (DE)**
Erfinder: **Wagner, Karl, Dr., Lindenstrasse 7, D-3016 Seelze (DE)**

(74) Vertreter: **Meyer-Dulheuer, Karl-Hermann, Dr. et al, HOECHST Aktiengesellschaft Zentrale Patentabteilung Postfach 80 03 20, D-6230 Frankfurt/Main 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung bezieht sich auf ein Mikrobiozid mit flüssiger oder pastöser Konsistenz auf der Basis eines Harnstoffderivats und seine Verwendung als technisches Konservierungsmittel.

Es ist bekannt, dass Formaldehyd und formaldehydhaltige Additionsverbindungen mikrobiozid wirksam sind und für Konservierungszwecke eingesetzt werden. So werden insbesondere Kondensationsprodukte von Formaldehyd mit Oxyalkylaminen als Desinfektions- und Konservierungsmittel für Bohrölemulsionen verwendet (vgl. deutsche Patentschrift 1 148 706 = britische Patentschrift 920 301), und die bakterizide Wirkung von N-Methylolverbindungen halogenierter Carbonsäureamide wird zum Desinfizieren und Konservieren von Wachsen, Ölen, Pasten, wässrigen Dispersionen und Emulsionen ausgenutzt (vgl. deutsche Auslegeschrift 1 203 916 = US-Patentschrift 3 328 240). Ferner ist das Umsetzungsprodukt von Benzylalkohol und Formaldehyd als mikrobiozides Mittel bekannt, das sich zur Konservierung von Bohrölemulsionen, Dispersionsfarben und Wachsemulsionen eignet (vgl. deutsche Auslegeschrift 1 642 026 = britische Patentschrift 1 212 728). Ein weiteres Konservierungsmittel, insbesondere für technische Zwecke, basiert auf einem Addukt aus Formaldehyd und einem Glykol; dieses Addukt wird in Kombination mit 2-Methyl-3-oxo-5-chlor-thiazolin-(1,2) und Dimethylolharnstoff angewendet (vgl. deutsche Offenlegungsschrift 2 800 766 = britische Patentschrift 2 011 790). Schliesslich ist auch bekannt, dass Tetramethylolacetylendiharnstoff als Formaldehydabspalter für Desinfektionsmittel und desinfizierende Reiniger geeignet ist (vgl. Rezeptblatt ® Sokalan 140 der BASF AG, D-6700 Ludwigshafen).

Aufgabe der Erfindung ist die Bereitstellung eines mikrobioziden Mittels auf der Basis eines Harnstoffderivats, das vor allem gegenüber Bakterien ein breites Wirkungsspektrum aufweist und insbesondere in flüssiger oder pastöser Form anwendbar ist.

Die Erfindung betrifft ein Mikrobiozid mit flüssiger oder pastöser Konsistenz, das durch einen Gehalt an einem Gemisch aus 30 bis 99 Gewichtsprozent Tetramethylolglykoluril und 70 bis 1 Gewichtsprozent eines üblichen Fungizids gekennzeichnet ist.

Ferner betrifft die Erfindung die Verwendung eines Mikrobiozids, das das vorgenannte Gemisch enthält, zum Konservieren von technisch genutzten, flüssigen oder pastösen Materialien.

Tetramethylolglykoluril (TMGU) ist ein Derivat von Diureylenethan und hat die Formel

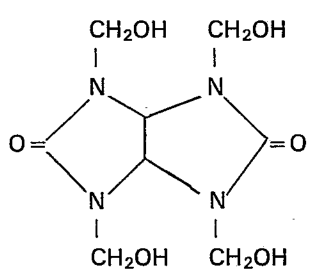

Es wird hergestellt durch Umsetzung von Glykoluril mit Formaldehyd oder einer Formaldehyd abgebenden Verbindung, vorzugsweise Paraformaldehyd. Die Umsetzung wird in wässrigem Medium bei einem pH-Wert von 8 bis 10 durchgeführt. Die Reaktionstemperatur liegt im Bereich von 10 bis 90°C, vorzugsweise 40 bis 70°C. Das Molverhältnis von Glykoluril zu Formaldehyd beträgt 1:3,8 bis 1:4,2, vorzugsweise 1:4. TMGU ist eine weisse, kristalline Festsubstanz mit einem Schmelzpunkt von 136°C, die gut wasserlöslich ist [vgl. Journal of Coatings Technology, Vol. 51 (1979), Seite 102].

Zur Herstellung der Flüssigkeit oder der Paste dient Wasser als Verdünnungsmittel. Im Falle einer wässrigen Lösung, die vorzugsweise einen TMGU-Gehalt von 40 bis 70 Gewichtsprozent aufweist, liegt der pH-Wert im Bereich von 4 bis 10, vorzugsweise von 5 bis 9. Die Paste enthält vorzugsweise ein Verdikkungsmittel, insbesondere einen Celluloseether, z.B. Methylcellulose, Hydroxyethylcellulose oder Hydroxypropylcellulose, oder einen Celluloseester, z.B. Carboxymethylcellulose, oder Polyvinylalkohol, Polyvinylpyrrolidon oder Polyethylenglykol. Die Menge des Verdickungsmittels beträgt 0,2 bis 5 Gewichtsprozent, vorzugsweise 0,5 bis 2 Gewichtsprozent (bezogen auf das Mikrobiozid); sie ist von der Art des jeweils verwendeten Verdickungsmittels und der Wirkstoffe abhängig.

In dem erfindungsgemässen Mikrobiozid liegt das Tetramethylolglykoluril in Kombination mit einem üblichen Fungizid vor. Das Gemisch besteht aus 30 bis 99 Gewichtsprozent Tetramethylolglykoluril und 70 bis 1 Gewichtsprozent eines Fungizids, vorzugsweise aus 40 bis 97 Gewichtsprozent Tetramethylolglykoluril und 60 bis 3 Gewichtsprozent eines Fungizids. Das Gemisch enthält gegebenenfalls auch mehrere verschiedene Fungizide.

Als Fungizid eignet sich insbesondere eine organische Zinkverbindung, ein Thiuramderivat, ein Benzimidazolderivat, ein Isothiazolderivat oder ein Pyridin-N-oxid-Derivat. Beispiele hierfür sind Zink-(N,N-dimethyl-dithiocarbamat), Zink-bis-(2-mercaptopyridin-N-oxid), Tetramethylthiuramdisulfid, 2-Methoxycarbonylaminobenzimidazol, Benz-isothiazol-3-on, 2-Methyl-isothiazolin-3-on, 5-Chlor-2-methyl-isothiazolin-3-on und Natrium-2-mercaptopyridin-N-oxid.

Das wesentliche Merkmal der Erfindung beruht auf der antibakteriellen Wirkung von Tetramethylolglykoluril, die sich durch Bestimmung der minimalen Hemmkonzentrationen (MHK-Werte) messen lässt. Die MHK-Werte sind die geringsten Gewichtskonzentrationen an TMGU, bei denen das Wachstum der Testkeime vollständig gehemmt wird. Zu ihrer Ermittlung werden je 10 ml Standard-I-Nährbouillon in sterilen Reagenzgläsern mit abgestuften Mengen TMGU versetzt, und das Nährmedium wird anschliessend mit 24 h alten Bouillon-Bakterienkulturen beimpft. In jedes Reagenzglas werden 2 Millionen Keime gegeben. Die Kulturen werden 48 h lang bei einer Temperatur von 36°C bebrütet (vgl. auch Näveke-Tepper, Einführung in die mikrobiologischen Arbeitsmethoden, Gustav Fischer Verlag 1979, Seiten 109 und 110). Die MHK-Werte von Tetramethylolglykoluril gegenüber üblichen Bakterien betragen

0,05 Gewichtsprozent (bezogen auf die Nährbouillon).

Das erfindungsgemässe Mikrobiozid wird zum Konservieren von technisch genutzten, flüssigen oder pastösen Materialien verwendet. Als zu konservierende Substrate eignen sich beispielsweise wässrige Lösungen, wässrige Dispersionen, Dispersionsfarben, Klebstoffe, Wachse, Fette und Öle.

Durch die folgenden Beispiele wird die Erfindung näher erläutert. Prozentangaben beziehen sich jeweils auf das Gewicht.

*Beispiel 1*

21,4 kg Wasser werden mit Natronlauge (32prozentig) auf einen pH-Wert von 9,5 eingestellt. In diese alkalische Lösung werden unter Rühren 14,2 kg Glykoluril und 12 kg Paraformaldehyd eingetragen, und die erhaltene Suspension wird 2 Stunden lang auf eine Temperatur von 70°C erwärmt. Man erhält eine klare gelbliche Lösung mit einer Dichte von 1,23 g/cm$^3$ und einem pH-Wert von 7,5. Die Lösung enthält 55 Prozent TMGU.

*Beispiel 2*

9 kg der nach Beispiel 1 erhaltenen Lösung werden mit 1 kg einer wässrigen Lösung, die 3,5% 2-Methyl--isothiazolin-3-on und 10,4% 5-Chlor-2-methyl-isothiazolin-3-on enthält, gemischt. Die resultierende klare gelbliche Lösung wird mit Salzsäure (7,3prozentig) auf einen pH-Wert von 5,5 eingestellt; die Lösung hat einen TMGU-Gehalt von 49,5 Prozent.

*Beispiel 3*

9,6 kg der nach Beispiel 1 erhaltenen Lösung werden unter Rühren mit 0,4 kg Benzisothiazol-3-on vermischt, und die erhaltene Suspension wird mit Natronlauge auf einen pH-Wert von 9 eingestellt. Nach 2stündigem Rühren der Suspension erhält man eine klare bräunliche Lösung mit einem TMGU-Gehalt von 52,8 Prozent.

*Beispiel 4*

3,7 kg Wasser werden mit 0,15 kg Natriumhexametaphosphat und 0,15 kg Methylcellulose vermischt, und das Gemisch wird 30 Minuten lang gerührt. Dann werden 6 kg 2-Methoxycarbonylaminobenzimidazol portionsweise unter Rühren in das Gemisch eingetragen. Die erhaltene Suspension wird mit 6 kg der nach Beispiel 1 erhaltenen Lösung vermischt, und man erhält eine giessfähige Paste mit einem TMGU-Gehalt von 20,6 Prozent.

*Beispiel 5*

3,7 kg Wasser werden mit 0,15 kg Natriumhexametaphosphat und 0,15 kg Methylcellulose vermischt, und das Gemisch wird 30 Minuten lang gerührt. Dann werden 4 kg Zink-N,N-dimethyldithiocarbamat portionsweise unter Rühren in das Gemisch eingetragen. Die erhaltene Suspension wird mit 6 kg der nach Beispiel 1 erhaltenen Lösung und danach mit 2 kg feingemahlenem Calciumcarbonat vermischt. Man erhält eine giessfähige Paste mit einem TMGU-Gehalt von 20,6 Prozent.

*Anwendungsbeispiel*

In einer Standard-I-Nährbouillon werden die MHK-Werte des Tetramethylolglykolurils (TMGU) und des Dimethylolharstoffs (DMH) als Vergleichssubstanz für verschiedene Testkeime ermittelt. Die Prüfergebnisse sind aus der nachstehenden Tabelle ersichtlich.

| Testkeim | MHK - Wert (%) | |
|---|---|---|
| | TMGU | DMH |
| Bacillus subtilis | 0,05 | 0,1 |
| Escherichia coli | 0,05 | 0,05 |
| Pseudomonas aeriginosa | 0,05 | 0,2 |
| Staphylococcus aureus | 0,05 | 0,1 |

**Patentansprüche**

1. Mikrobiozid mit flüssiger oder pastöser Konsistenz, gekennzeichnet durch einen Gehalt an einem Gemisch aus 30 bis 99 Gewichtsprozent Tetramethylolglykoluril und 70 bis 1 Gewichtsprozent eines üblichen Fungizids.
2. Mikrobiozid nach Anspruch 1, dadurch gekennzeichnet, dass das Fungizid eine organische Zinkverbindung, ein Thiuramderivat, ein Benzimidazolderivat, ein Isothiazolderivat oder ein Pyridin-N--oxid-Derivat ist.
3. Verwendung des Mikrobiozids nach Anspruch 1 zum Konservieren von flüssigen oder pastösen Materialien.

**Claims**

1. Microbiocide having a liquid or pasty consistency, characterized by a content of a mixture of 30 to 99 percent by weight of tetramethylol glycoluril and 70 to 1 percent by weight of a common fungicide.
2. Microbiocide according to claim 1, characterized in that the fungicide is an organic zinc compound, a thiuram derivative, a benzimidazole derivative, an isothiazole derivative, or a pyridine-N-oxide derivative.
3. Use of the microbiocide according to claim 1 for preserving liquid or pasty materials.

**Revendications**

1. Microbiocide ayant une consistance liquide ou pâteuse caractérisé en ce qu'il contient un melange de 30 à 99% en poids de tétraméthylol-glycolurile et 70 à 1% en poids d'un fongicide usuel.
2. Microbiocide selon la revendication 1, caractérisé en ce que le fongicide est un composé organique du zinc, un dérivé du thiurame, un dérivé du benzimidazole, un dérivé de l'isothiazole ou un dérivé du pyridine-N-oxyde.
3. Application du microbiocide selon la revendication 1 à la conservation de matières liquides ou pâteuses.